Europäisches Patentamt

European Patent Office

Office européen des brevets

(11) Veröffentlichungsnummer: **0 150 345**
**A2**

## (12) EUROPÄISCHE PATENTANMELDUNG

(21) Anmeldenummer: **84114829.9**

(51) Int. Cl.⁴: **C 02 F 9/00**

(22) Anmeldetag: **06.12.84**

(30) Priorität: **11.01.84 DE 3400688**

(71) Anmelder: **CHEMISCHE WERKE HÜLS AG, - RSP Patente / PB 15 - Postfach 13 20, D-4370 Marl 1 (DE)**

(43) Veröffentlichungstag der Anmeldung: **07.08.85 Patentblatt 85/32**

(84) Benannte Vertragsstaaten: **AT BE DE FR GB IT**

(72) Erfinder: **Smigerski, Hans-Jürgen, Dr., Kolberger Strasse 11, D-4370 Marl (DE)**

(54) **Ausschleusung von Schwermetallasche durch Zentrifugalbehandlung oder Druckfiltration (1111119.**

(57) Die Erfindung betrifft zwei Ausgestaltungen des Verfahrens zur Ausschleusung von Schwermetallasche aus einer wäßrigen Rußsuspension gemäß der deutschen Patentanmeldung P 32 41 538.9. Danach werden die vom Ruß befreiten wäßrigen Lösungen entweder direkt einer Zentrifugalbehandlung in einem Tellerseparator oder einer Druckfiltration unterworfen oder man befreit die Lösungen mit Hilfe eines Filters von der Asche, spült den Filterrückstand in eine Grube und führt erst bei den dabei anfallenden Lösungen eine Zentrifugalbehandlung oder eine Druckfiltration durch.

0150345
O.Z. 3962

Ausschleusung von Schwermetallasche durch Zentrifugalbehandlung oder Druckfiltration

Der bei der Herstellung von Synthesegas durch Vergasung anfallende Rußanteil, der etwa 1 bis 2 % des eingesetzten Öls ausmacht, wird üblicherweise mit Kreislaufwasser niedergeschlagen und als Ruß-Slurry ausgetragen, z. B. gemäß DE-PS 10 76 092. Die erhaltene wäßrige Rußsuspension wird beispielsweise mit Ölen extrahiert, wobei Ruß-Öl-Agglomerate entstehen, die auch als Pellets bezeichnet werden. Diese werden sodann - gegebenenfalls nach Homogenisierungin die Vergasung zurückgeführt.

Mit dem zunehmenden Einsatz schwermetallhaltiger Rückstandsöle treten Probleme durch Verstopfung und Korrosion infolge Aufkonzentrierung von Metallen, wie Vanadium, Eisen und Nickel, in den Ruß- und Wasserkreisläufen auf.

Gegenstand der deutschen Patentanmeldung P 32 41 538.9 ist ein "Verfahren zur Ausschleusung von Schwermetallasche aus einer wäßrigen Rußsuspension". Danach wird die wäßrige Suspension zunächst durch Behandlung mit einem Hilfsmittel, das in Wasser nicht löslich ist, vom Ruß befreit.

Die wäßrige Phase, die einen erheblichen Anteil Schwermetallasche enthält, wird gegebenenfalls über einem Filter vorkonzentriert und einer Schwerkraftstufe zur Sedimentierung zugeführt.

Zwar läßt sich nach diesem Verfahren der Anteil der Schwermetalle im Kreislaufwasser erheblich verringern, jedoch erfordert die Reinigung der Schwerkraftstufe von abgesetzter Schwermetallasche ein erhebliches Bauvolumen. Daher stellt sich erneut die Aufgabe, die Schwermetallasche von der wäßrigen Phase abzutrennen. Gesucht ist aber vor allem ein

0150345
o.Z. 3962

Verfahren, bei dem man die Sedimentierung, die bekannterweise nur eine geringe Aufkonzentrierung ermöglicht, umgehen kann.

Es wurde jetzt gefunden, daß man die Schwermetallasche mit einem guten Wirkungsgrad von den bei der Vergasung anfallenden, entrußten wäßrigen Lösungen abtrennen kann, wenn man die Lösungen einer Zentrifugalbehandlung in einem Tellerseparator oder einer Druckfiltration unterwirft. Es ist empfehlenswert, die Lösungen vorher in einem Eindicker aufzukonzentrieren.

Die entrußten wäßrigen Lösungen können unterschiedliche Feststoffkonzentrationen aufweisen. Tabelle 1 zeigt, daß der Feststoffgehalt mit Hilfe eines Tellerseparators bei einer Aufgabenkonzentration von etwa 0,2 % um den Faktor 5 bis 9 gesenkt werden kann. Mit Hilfe der Druckfiltration erhält man optisch blanke Lösungen, siehe Beispiele 2 und 3.

Es gibt verschiedene Möglichkeiten der Druckfiltration. Hierunter soll im Rahmen dieser Anmeldung jede Filtration verstanden werden, die mit einem Differenzdruck arbeitet. Das absolute Druckniveau kann also auch unterhalb des Atmosphärendrucks liegen, wenngleich diese Ausführungsform nicht zu bevorzugen ist. Beispielsweise kann eine klassische Kuchenfiltration mit Hilfe eines Taschenfilters durchgeführt werden. Man kann eine Zentrifugalbehandlung mit einer Röhren- oder Kammerzentrifuge durchführen (vgl. H. Trawinski, "Die Trennung feindisperser Stoffe aus Flüssigkeiten durch Filtration und Sedimentation; Chemie-Ing.-Technik 47, 274-281, (1975). Schließlich kann man auch mit einer Kammerfilterpresse arbeiten. Wichtig ist, daß die genannten Geräte eine Mechanik zur Abreinigung besitzen, wenn der Filterkuchen nicht auf andere Weise bequem abgetrennt werden kann.

Eine Variante des erfindungsmäßigen Verfahrens besteht darin, die anfallenden wäßrigen Lösungen gemäß deutscher Patentanmeldung P 32 41 538.9 mit Hilfe eines Filters von der Asche zu befreien, den Filterrückstand mit Wasser in eine Grube spülen und das Spülwasser zur endgültigen Ausschleusung der Asche einer Zentrifugalbehandlung in einem Tellerseparator oder einer Druckfiltration zu unterwerfen. Beispiel 2 zeigt, daß auch derartig aufkonzentrierte Lösungen sich gut filtrieren lassen. Die Feststoffkonzentration dieser Reinigungslösungen ist im allgemeinen höher, der Trenneffekt durch Zentrifugalbehandlung in einem Tellerseparator oder durch Druckfiltration ist daher noch größer. Auch in diesem Fall ist es empfehlenswert, die Lösungen vorher in einem Eindicker aufzukonzentrieren.

## Beispiele 1.1 bis 1.6

Eine wäßrige Lösung mit einem Feststoffgehalt von 0,19 Gewichtsprozent Schwermetallasche wird in einem Volumenstrom von 45 1/h dem Labor-Tellerseparator LG 205-3 der Firma Westfalia, D-4740 Oelde zugeführt. Das erhaltene Filtrat weist eine Konzentration von 0,022 Gewichtsprozent auf. Der Gesamtabscheidegrad beträgt 0,881.

Analog wurden die übrigen Werte der Tabelle 1 erhalten.

Tabelle 1

Schwermetallschlammausschleusung mit Hilfe eines Tellerseparators

| Bsp. | Volumenstrom (1/h) | Feststoffgehalt (Gew. -%) | | Gesamtabscheide-grad |
|------|------|------|------|------|
| | | Aufgabe | Filtrat | |
| 1.1 | 45 | 0,190 | 0,022 | 0,881 |
| 1.2 | 193 | 0,177 | 0,023 | 0,870 |
| 1.3 | 128 | 0,177 | 0,031 | 0,825 |
| 1.4 | 82 | 0,177 | 0,028 | 0,842 |
| 1.5 | 28,1 | 0,177 | 0,030 | 0,831 |
| 1.6 | 7,6 | 0,177 | 0,028 | 0,842 |

Beispiel 2

Eine wäßrige Lösung mit einem Feststoffgehalt von 0,70 Gewichtsprozent Schwermetallasche wird mit dem Taschenfilter
der Firma BHS (Bayerische Berg-, Hütten- und Salzwerke,
D-8972 Sonthofen) über ein Polyacrylnitril-Filtergewebe
unter einem Differenzdruck von 3,5 bar filtriert. Das Filtrat ist optisch blank und enthält keine nachsedimentierenden Feststoffpartikel mehr. Der spezielle Kuchenwiderstand
der Feststoffschicht liegt bei $10^{12}$ m/kg.

Beispiel 3

Analog zu Beispiel 2 wird eine Lösung mit einem Feststoffgehalt von 0,1 Gewichtsprozent bei einem Differenzdruck von
2 bar filtriert. Auch dieses Filtrat ist optisch blank.

Patentansprüche:

1. Verfahren zur Ausschleusung von Schwermetallasche aus einer wäßrigen Rußsuspension, wie sie bei der Synthesegaserzeugung durch Partialvergasung von Schwerölen anfällt und wobei diese Rußsuspension in üblicher Weise mit zur Abtrennung von Ruß geeigneten, mit Wasser nicht mischbaren, organischen Hilfsmitteln, gegebenenfalls unter anschließender Pelletisierung behandelt und die wäßrige vom Ruß befreite Phase abgetrennt wird, durch Sedimentierung in einer Schwerkraftstufe, gegebenenfalls nach einer Vorkonzentrierung über Filter und anschließender Ausschleusung,

dadurch gekennzeichnet,
daß man die wäßrige Lösung anstelle einer Sedimentierung einer Zentrifugalbehandlung in einem Tellerseparator oder einer Druckfiltration unterwirft.

2. Verfahren zur Ausschleusung von Schwermetallasche aus einer wäßrigen Rußsuspension gemäß dem Oberbegriff von Anspruch 1,
dadurch gekennzeichnet,
daß man die vom Ruß befreite wäßrige Phase mit Hilfe eines Filters von der Asche befreit, den Filterrückstand in einer Grube sammelt und anschließend einer Zentrifugalbehandlung in einem Tellerseparator oder einer Druckfiltration unterwirft.

3. Verfahren nach Anspruch 1 oder 2,
dadurch gekennzeichnet,
daß man die vom Ruß befreite wäßrige Phase vor der Ascheabscheidung einem Eindicker zuführt.